# EUROPEAN PATENT APPLICATION

(11) **EP 2 518 419 A1**
(43) Date of publication of application: **31.10.2012**
(21) Application number: 11382121.9
(22) Date of filing: 27.04.2011
(51) Int. Cl.: F24J 2/51, F24J 2/46

(54) **Solar panel**

(71) Applicant: Fabrigas, S.L.U., 08755 Castellbisbal (ES)
(72) Inventor: Waltermann, Rolf, D-48163, Münster (DE)
(74) Representative: Ponti Sales, Adelaida

(57) **Abstract**

The solar panel comprises:
- a solar glass (1) on which solar radiation is projected;
- an absorber (2) placed adjacent to said solar glass (1) and that absorbs energy from said solar glass (1);
- an isolator (3) placed adjacent to said absorber (2); and
- a cover (4) placed in an opposed position to said solar glass (1); and it is characterised in that said isolator (3) is an inert gas.

It permits to obtain low manufacturing costs and a great insulation level thanks to the inert gas.

## Description

The present invention refers to a solar panel, particularly to a solar panel for sanitary hot water.

### BACKGROUND OF THE INVENTION

Solar energy is a resource that is increasingly used thanks to its environmental advantages.

Currently used solar panels have a structure formed by an closure-like external carcass, a solar glass on which solar radiation is projected, an absorber placed against said solar glass that absorbs energy from the solar radiation, an insulator to minimise the heat losses placed adjacent to said absorber and a cover placed in the opposite position to said solar glass.

These conventional solar panels have different drawbacks:
Firstly, it is necessary the panels to be vented to reduce the formation of internal condensation. The panel ventilation implies an energy loss and possible source of internal dirt.

Furthermore, in the solar panels currently known it is not possible to prevent the formation of vapours that steam the cover and the solar panels must be always internally isolated. This internal insulator cannot produce any kind of degasification to prevent a decrease of its performance when the cover is steamed.

On the other hand, the use of an insulator made from glass fibre can make that small parts can be detached and placed between the insulator and the solar glass.

### DESCRIPTION OF THE INVENTION

With the solar panel of the invention said drawbacks can be solved, presenting other advantages that will be described.

The solar panel of the present invention comprises:
- a solar glass on which solar radiation is projected;
- an absorber placed adjacent to said solar glass and that absorbs energy from the solar glass;
- an insulator placed adjacent to said absorber; and
- a cover placed in an opposed position to said solar glass; and it is characterised in that said insulator is an inert gas.

According to a preferred embodiment, said inert gas is argon, even though it could be any suitable inert gas.

Advantageously, said cover comprises a perimeter flange for its fixation to said solar glass, and said cover is made from aluminium or polyvinyl chloride (PVC).

According to a preferred embodiment, said cover comprises, on its external part, a recessed zone to provide stiffness to the read part.

Preferably, the gap between the absorber and the cover that is occupied by said inert gas is between 20 and 60 mm.

With the solar panel of the present invention the following advantages are obtained:
- low manufacturing costs;
- great insulation level thanks to the inert gas;
- elimination of the assembly of conventional insulator;
- it prevents the cover to be steamed by the degasification of the insulator;
- the absorber can expand freely and it does not create additional stresses;
- it permits a low temperature on its surface;
- the weight of the panel is lower than conventional panels;
- its basic construction permits a lot of different configurations, according to its final application;
- it is ideal to be used in facades.

### BRIEF DESCRIPTION OF THE DRAWINGS

For a better understanding of what has been described some drawings are attached in which, diagrammatically and only as a non-limitative example, an embodiment is shown.

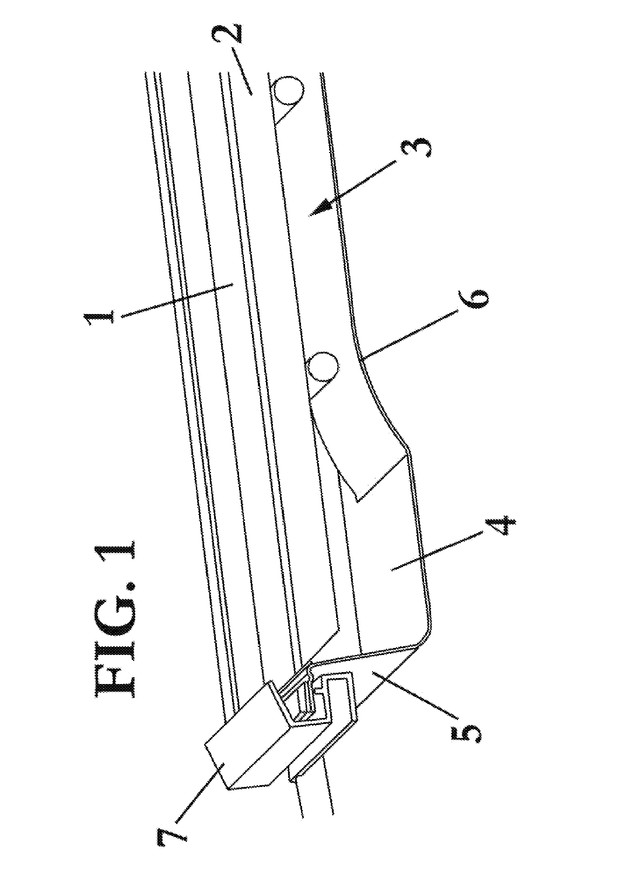

Fig. 1 is a perspective view of a sectioned solar panel of the present invention.

### DESCRIPTION OF A PREFERRED EMBODIMENT

As shown in Fig. 1, the solar panel of the present invention comprises a solar glass 1 on which solar radiation is projected. Immediately under said solar glass 1 (according to Fig. 1), an absorber 2 is placed, that absorbs the energy collected by said solar glass 1.

Said absorber 2 is preferably made from copper-copper or from aluminium-copper, even though it could be done from any suitable material.

The solar panel of the present invention also comprises the cover 4 placed in the opposed position to said solar glass 1. Said cover 4 is preferably made from aluminium and comprises a perimeter flange 5 that is directly joined to said solar glass 1.

Furthermore, said cover 4 comprises a recessed zone 6 at its central part, which provides stiffness to the rear part.

Between said cover 4 and said absorber 2 an inert gas 3 is placed, such as e.g. argon, which makes an insulation function. The gap between said cover 4 and said absorber 2 is preferably from 20 and 60 mm.

As the insulator 3 is an inert gas, it presents the advantage that permits the absorber 2 to be expanded freely, and no additional stresses are created in the solar panel.

The solar panel of the present invention also comprises a frame 7 formed by aluminium or plastic profiles that is used as support for the assembly of all the components forming the solar panel.

Even though reference is made to a specific embodiment of the invention, it is clear for a person skilled in the art that the described solar panel is susceptible of numerous variations and modifications, and that all the details cited can be substituted by other technically equivalent ones, without departing from the scope of protection defined by the attached claims.

## Claims

1. Solar panel comprising:
- a solar glass (1) on which solar radiation is projected;
- an absorber (2) placed adjacent to said solar glass (1) and that absorbs energy from said solar glass (1);
- an isolator (3) placed adjacent to said absorber (2); and
- a cover (4) placed in an opposed position to said solar glass (1);
**characterised in that** said isolator (3) is an inert gas.

2. Solar panel according to claim 1, wherein said inert gas is argon.

3. Solar panel according to claim 1, wherein said cover (4) comprises a perimeter flange (5) for its fixation to said solar glass.

4. Solar panel according to claim 1 or 3, wherein said cover (4) is made from aluminium.

5. Solar panel according to claim 1, 3 or 4, wherein said cover (4) comprises, at its external part, a recessed zone (6).

6. Solar panel according to claim 1 or 2, wherein the gap between the absorber (2) and the cover (4) that is occupied by said inert gas (3) is between 20 and 60 mm.
